# EUROPÄISCHE PATENTSCHRIFT

(11) **EP 4 402 060 B1**
(45) Veröffentlichungstag und Bekanntmachung des Hinweises auf die Patenterteilung: **24.06.2026**
(21) Anmeldenummer: 22782496.8
(22) Anmeldetag: 15.09.2022
(51) Int. Cl.: B64F 1/22, B64F 1/32, B64F 5/40

(54) **MOBILE VORRICHTUNG ZUR ENTSENDUNG UND AUFNAHME VON DROHNEN**
MOBILE DEVICE FOR SENDING AND RECEIVING DRONES
DISPOSITIF MOBILE D'ENVOI ET DE RÉCEPTION DE DRONES

(30) Priorität: 16.09.2021 DE 102021123992
(43) Veröffentlichungstag der Anmeldung: 24.07.2024
(73) Patentinhaber: HHLA Sky GmbH, 20457 Hamburg (DE)
(72) Erfinder: GRONSTEDT, Matthias, 20457 Hamburg (DE); HILBIG, Olaf, 32278 Kirchlengern (DE); OLUSCHINSKY, Stefan, 32278 Kirchlengern (DE); SCHRÖDER, Marius, 33659 Bielefeld (DE)
(74) Vertreter: Königer, Karsten
(86) Internationale Anmeldenummer: PCT/EP2022/075712
(87) Internationale Veröffentlichungsnummer: WO 2023/041677

(56) Entgegenhaltungen:
- CN-A- 106 503 954
- US-A1- 2016 364 989
- US-A1- 2017 225 802
- US-A1- 2018 265 295
- US-A1- 2019 023 416
- US-A1- 2021 148 131

## Beschreibung

Gegenstand der Erfindung ist eine mobile Vorrichtung zur Entsendung und Aufnahme von Drohnen.

Mobile Vorrichtungen zur Entsendung und Aufnahme von Drohnen sind bereits vorgeschlagen worden. US 2021/148131 A1 zeigt eine Lagereinheit für Drohnen. CN 106 503 954 A1 zeigt ein mobiles Logistiksystem für Drohnen. US 2018/265295 A1 zeigt ein mobiles System umfassend eine Zug mit Lokomotive und Lagereinheit für Drohnen. US 2016/364989 A1 zeigt ein mobiles Basismodul für Drohnen. US 2017/225802 A1 zeigt eine System umfassend eine Lager- und Startvorrichtung für Drohnen. US 2019/023416 A1 zeigt eine Lande- und Lagervorrichtung für Drohnen. WO 2019/197606 A1 schlägt einen Seefracht-Container vor, der eine Ladeeinheit zur Aufladung einer Drohne mit elektrischer Energie sowie eine Kommunikationseinheit zur Kommunikation mit der Drohne hat, wobei der Seefracht-Container als Start- und Landeplattform für die Drohne ausgebildet ist, wobei der Seefracht-Container ein Dach hat, das zum Öffnen und Schließen ausgebildet ist, um die Drohne im Inneren des Seefracht-Containers zu lagern und für einen Überwachungsflug aus den Seefracht-Container herauszulassen.

Aufgabe der Erfindung ist es, eine mobile Vorrichtung zur Entsendung und Aufnahme von Drohnen zur Verfügung zu stellen, die gegenüber bekannten Vorrichtungen Vorteile aufweist.

Die Aufgabe wird gelöst durch eine Vorrichtung gemäß Patentanspruch 1.

Weitere vorteilhafte Ausführungsformen sind Gegenstand der Unteransprüche oder nachfolgend beschrieben.

Die Hebeeinheit zur Verstellung der Höhe der Landeplattform ermöglicht es, dass die Landeplattform in eine Höhe bewegt werden kann, die für das Starten und/oder Landen der Drohne vorteilhaft ist, und auch in eine Höhe bewegt werden kann, die für die Übergabe der Drohne von der Landeplattform in die Lagerungseinheit und umgekehrt vorteilhaft ist. Durch Unterbringung der verschiedenen Einheiten in einer gemeinsamen Einheit bildet die erfindungsgemäße Vorrichtung einen "Drohnen-Hangar":
Vorzugsweise sind die Landeplattform, die Hebeeinheit und die Lagerungseinheit in einem Transportgestell befestigt. Vorzugsweise kann das Transportgestell als komplettes Modul in einen Behälter, vorzugweise einen Standard-Seefracht-Container eingebracht werden. Dies hat den Vorteil, dass die Montage der einzelnen Komponenten zunächst ohne die Außenhülle eines Containers erfolgen kann. Die einzelnen Komponenten sind also bei der Montage leicht zugänglich. An dem Transportgestell kann insbesondere auch ein Schaltschrank befestigt werden.

Vorzugsweise hat der Seefracht-Container ein Dach hat, das zum Öffnen und Schließen ausgebildet ist. Dieses Öffnen und Schließen wir vorzugsweise von der Drohne selbst gesteuert.

Die Lagerungseinheit umfasst eine um eine vertikale Achse drehbare Dreheinheit, die zwei Lagerebenen aufweist, die auf gegenüberliegenden Seiten der vertikalen Achse angeordnet sind. Die beiden Lagerebenen sind vertikal zueinander versetzt angeordnet, so dass die auf der einen Lagerebene lagernde Drohne die auf der anderen Lagerebene lagernde Drohne von oben betrachtet überlappen kann, ohne dass die Drohnen sich berühren.

Vorzugsweise umfasst die Lagerungseinheit zwei übereinander angeordnete Dreheinheiten. Vorzugsweise umfasst eine Lagerebene ein Fördersystem, das eine Förderbahn oder eine Rollenbahn umfasst, das die Entgegennahme und/oder Übergabe einer Drohne an die Landeplattform ermöglicht. Vorzugsweise weist das Fördersystem eine seitliche Begrenzung auf.

Vorzugsweise wird die Aufstandsfläche der Drohne in der Lagerposition von der Förder- oder Rollenbahn gebildet.

Vorzugsweise kann die Dreheinheit in 90-Grad Schritten positioniert werden. Vorzugsweise wird die Position der Dreheinheit über Sensoren erfasst. Vorzugsweise weisen die Lagerebenen Niederhalter zum Niederhalten von Kufen eines Landegestells einer Drohne auf. Vorzugsweise wird die Lagerposition der Drohne über Sensoren erfasst. Vorzugsweise weist das Fördersystem Mitnehmer zum Übergeben der Drohne auf die Parkebene auf. Vorzugsweise wird die Drohne vom Fördersystem auf die Lagerebene gezogen und gegen Endanschläge bewegt. Vorzugsweise wird die Lagerposition über Sensoren erkannt. Vorzugsweise kann ein Verriegelungsmechanismus die Drohne auf der Lagerebene fixieren.

Die beanspruchte Hebeeinheit ermöglicht das Anheben und Absenken der Landeplattform bis zu einer Höhe, von der eine Drohne starten und landen kann (Start-Höhe), sowie zu einer Höhe, in denen die Landeplattform eine Drohne an eine Lagerebene übergeben oder von einer Lagerebene entgegennehmen kann (Lagerebenen-Höhe). Vorzugsweise kann die Dreheinheit auch dann gedreht werden kann, wenn sich eine Lagerebene auf Höhe der Landeplattform befindet. Vorzugsweise kann in einer Position der Lagerebene ein Akku einer auf der Lagerebene lagernden Drohne geladen werden. Vorzugsweise erfolgt das Laden über eine Landelanze. Vorzugsweise ist die Lagerebene nach einer 180 Grad Drehung aus der Übergabeposition der Lagerebene für einen Menschen zugänglich.

In einer bevorzugten Ausführungsform der erfindungsgemäßen Vorrichtung gemäß Anspruch 14 kann eine Drohne durch Bewegung der Drohnen-Förderbänder und/oder Bewegung der Schiebeleisten in eine horizontale Position bewegt werden, in der die Drohne starten kann (horizontale Startposition der Drohne).

Vorzugsweise umfasst die Landeplattform eine Bestückungseinheit, umfassend eine zwischen den Drohnen-Förderbändern angeordneten Hubvorrichtung für Transportgut, ein Transportgut-Förderband zur Bewegung des Transportguts auf die Hubvorrichtung, wobei die auf der Landefläche stehende Drohne durch Bewegung der Drohnen-Förderbänder und/oder Bewegung der Schiebeleisten in eine Position bewegt werden kann, in der die Drohne auf der Hubvorrichtung angeordnetes Transportgut aufnehmen kann (Beladeposition).

Vorzugsweise sind die Drohnen-Förderbänder als Modultransportbänder ausgebildet. Vorzugsweise sind die Einzelelemente der Modulförderbänder zumindest teilweise offen, so dass Feuchtigkeit ablaufen kann.

Vorzugsweise sind die Landefläche, die Schiebeleisten und die Bestückungseinheit an einem Rahmengestell angebracht.

Vorzugsweise werden die Drohnen-Förderbänder über einen Elektromotor angetrieben.

Vorzugsweise können die Schiebeleisten eine Drohne so verschieben können, dass die Drohne gleichzeitig mit beiden Drohnen-Förderbändern Kontakt hat. Vorzugsweise können von einem Landgestell der Drohne umfasste Kufen durch die Schiebeleisten in eine Position parallel zu der Laufrichtung der Drohnen-Förderbänder bewegt werden. Vorzugsweise werden die Schiebeleisten über einen Kettentrieb angetrieben werden. Vorzugsweise sind die Schiebeleisten aus profiliertem Edelstahl sind. Vorzugsweise können die Schiebeleisten, wenn sie sich voneinander weg bewegen, auf der Landefläche befindliche Fremdteile wie beispielsweise kleine Äste oder Laub nach außen von der Landefläche runterschieben. Vorzugsweise werden die beiden Endlagen einer Schiebeleiste ("außen" bzw. "innen") mechanisch begrenzt werden. Vorzugsweise werden die beiden Endlagen der Schiebeleisten ("außen" bzw. "innen") sensorisch abgefragt werden. Vorzugsweise wird bei der Bewegung der Drohne in die Beladeposition ein Landegestell der Drohne an einer Anschlagskante ausgerichtet wird. Vorzugsweise werden bei der Bewegung der Drohne in die Beladeposition Kufen eines Landegestells der Drohne unter zwei Niederhaltelaschen bewegt. Vorzugsweise wird das Erreichen der Beladeposition durch Sensorik abgefragt.

Vorzugsweise halten Niederhaltelaschen ein Landegestell der Drohne, während die Drohne auf der Hubvorrichtung angeordnetes Transportgut aufnimmt.

Vorzugsweise ist die Hubvorrichtung als Scherenhubtisch ausgeführt. Vorzugsweise kann der Scherenhubtisch über einen selbsthemmenden Spindelantrieb in der Höhe verstellt werden kann. Vorzugsweise werden die Endlagen der Hubvorrichtung über Sensoren erfasst. Vorzugsweise sind die Endlagen de Hubvorrichtung mit Sicherheitsanschlägen gegen Beschädigungen gesichert. Vorzugsweise erfolgt der Antrieb der Hubvorrichtung über einen Elektromotor und ein angeflanschtes Getriebe.

Vorzugsweise ist die Landefläche mindestens 1,8 m mal 1,8 m groß. Diese Größe ermöglicht es, dass die Drohne, auch dann sicher auf der Landefläche landen kann, wenn die Drohne wegen äußerer Bedingungen oder wegen Ungenauigkeiten in der Steuerung oder Ortung punktgenauere Landungen nicht gewährleistet sind.

Vorzugsweise weist die mobile Vorrichtung seitlich benachbart zur der Lagerungseinheit auf der der Landeplattform gegenüberliegenden Seite einen Freiraum auf, der als Reparatur und Wartungsbereich genutzt werden kann.

Vorzugsweise wird die mobile Vorrichtung von der Drohne gesteuert.

Die erfindungsgemäßen Lösungen ermöglichen eine Automatisierung von Drohnenflügen mit sicherem Starten und Landen sowie Austausch von Drohnen und der Ladung von Akkus von Drohnen. Die Erfindung ermöglicht auch eine automatisierte Beladung und Entladung von Transportgut für Drohnen. Die Reichweite der Drohnen wird durch die Möglichkeit der Zwischenlandung und Akkuaufladung in der Vorrichtung vergrößert. So wird auch die Reichweite von Flügen mit Transportgut vergrößert. Es wird ein modulares, autarkes System zur Verfügung gestellt, das überall auf der Welt eingesetzt werden kann. Dadurch, dass die Vorrichtung in einen geschlossenen Container eingebracht werden kann, können darin lagernde Drohnen vor Witterungseinflüssen und unbefugtem Zugriff geschützt werden.

Die Erfindung wird anhand der Figuren, die ein Ausführungsbeispiel zeigen, näher erläutert. Es zeigen:

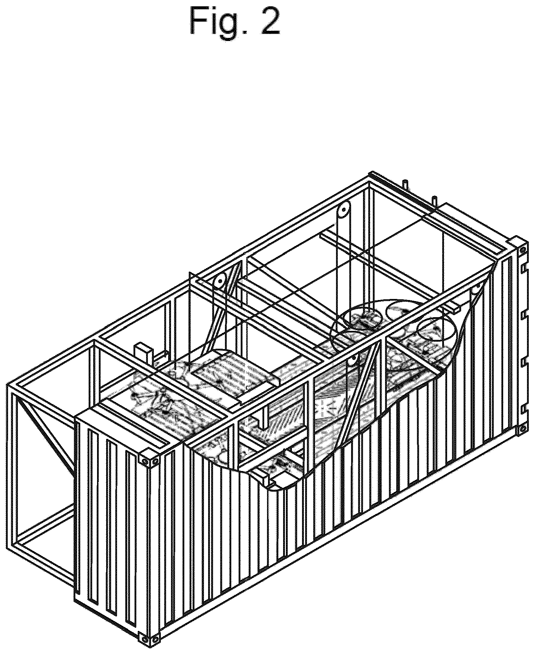

- Fig. 1 bis 2:: eine erfindungsgemäße Vorrichtung mit einer Drohne in der Beladeposition und drei Drohnen in Lagerposition;

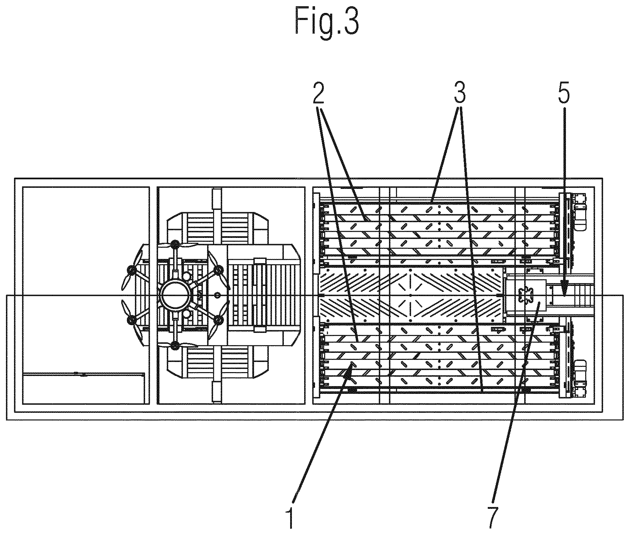

- Fig. 3:: eine Draufsicht auf eine erfindungsgemäße Vorrichtung mit einer Drohne in einer Lagerposition;
- Fig. 4:: eine erfindungsgemäße Vorrichtung mit einer Drohne in der Beladeposition und drei Drohnen in Lagerposition;

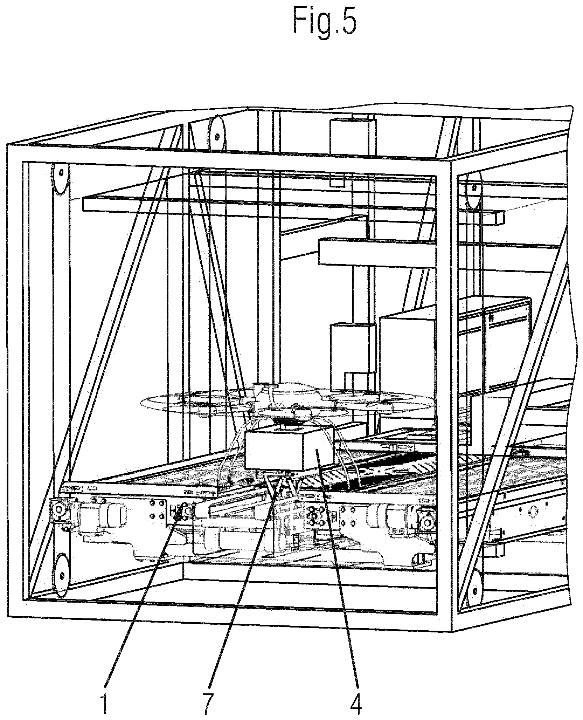

- Fig. 5:: eine erfindungsgemäße Vorrichtung mit einer Drohne in der Beladeposition;

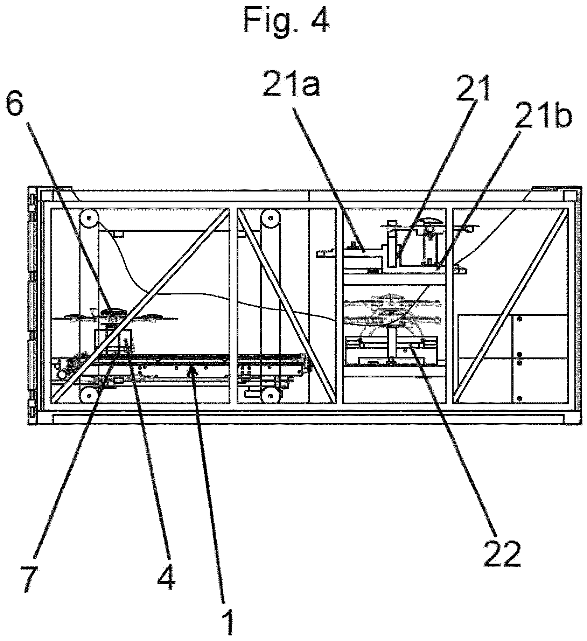

- Fig. 4:: eine erfindungsgemäße Vorrichtung mit einer Drohne in der Beladeposition und drei Drohnen in Lagerposition;

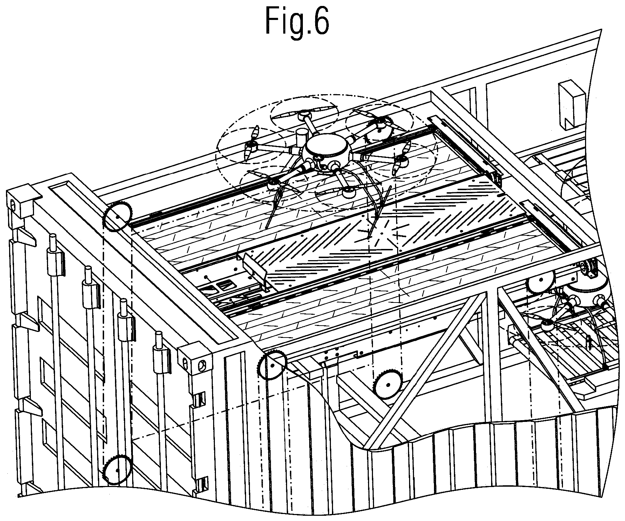

- Fig. 6:: eine erfindungsgemäße Vorrichtung mit der Hebeeinheit in Start-Höhe;

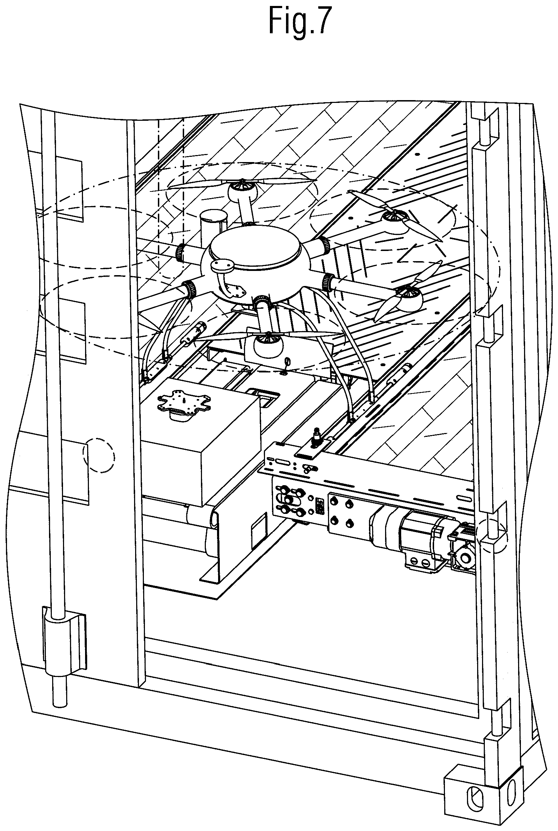

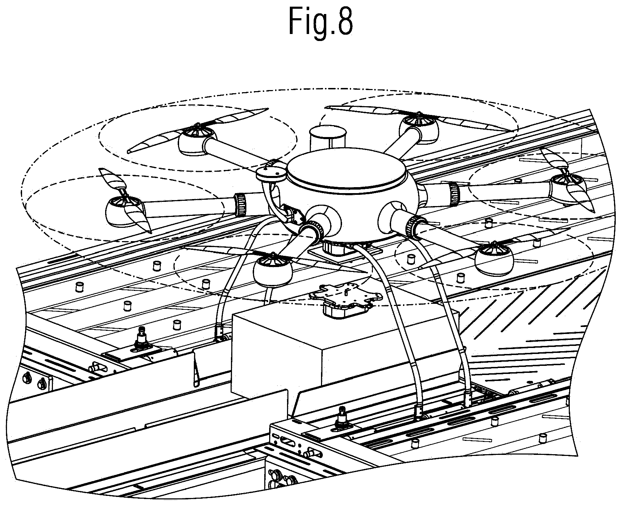

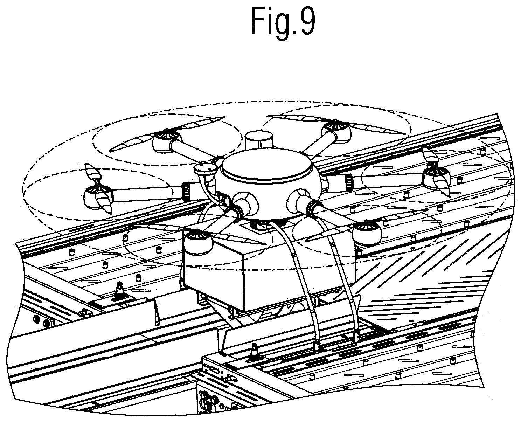

- Fig. 7 bis 9:: eine erfindungsgemäße Vorrichtung mit einer Drohne in Beladeposition und die Beförderung, das Anheben und das Ergreifen eines Transportguts;

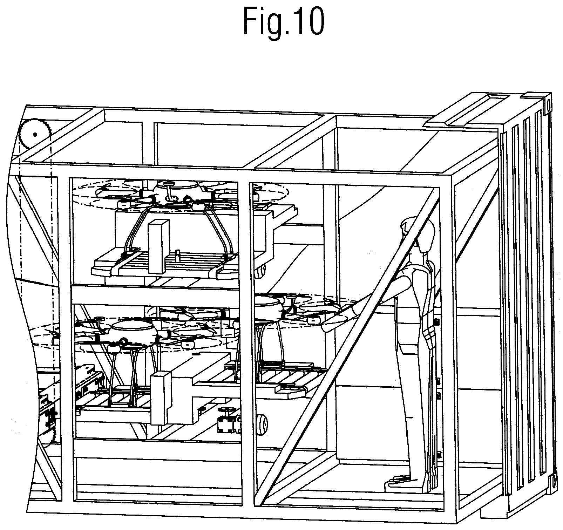

- Fig. 10:: eine erfindungsgemäße Vorrichtung mit einem Wartungsbereich;

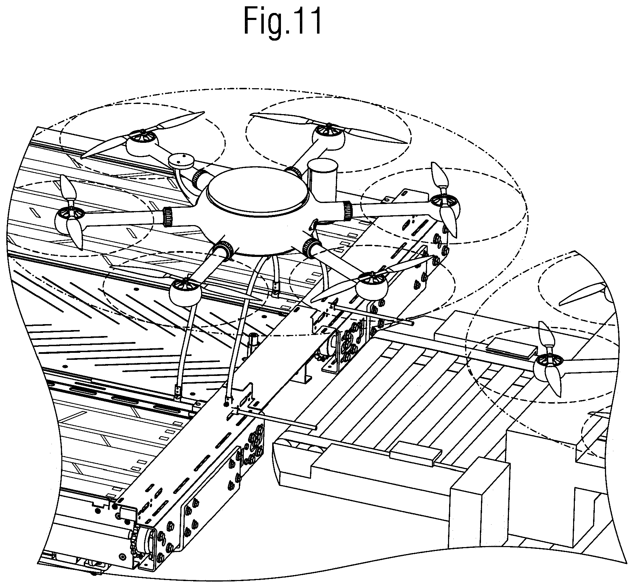

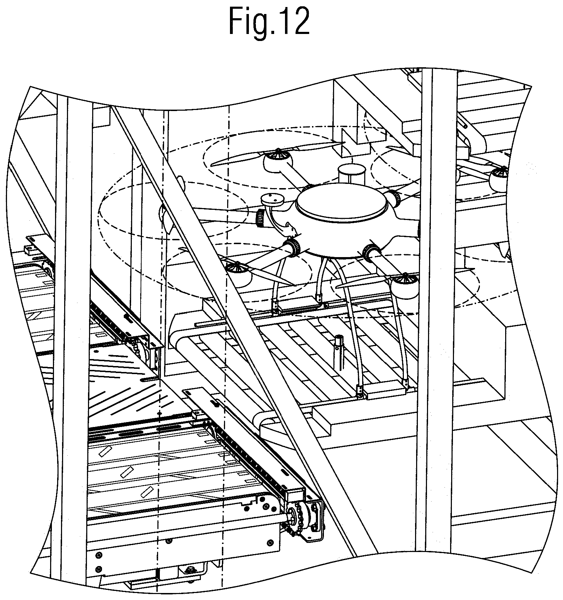

- Fig. 11:: die Übergabe einer Drohne von der Landplattform zu einer Lagerebene;

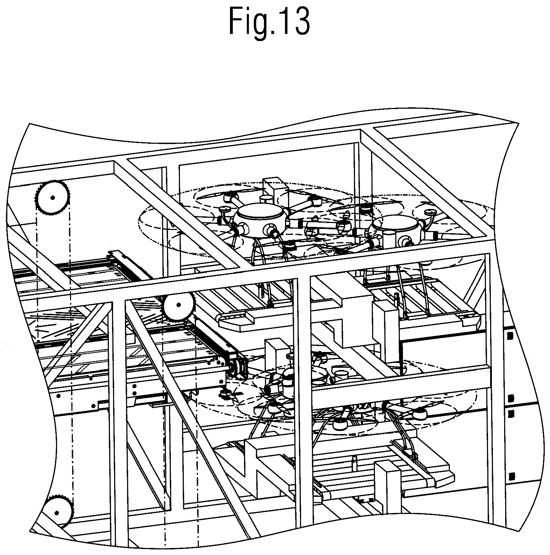

- Fig. 13:: eine Lagerebene mit Drohne in Lagerposition;

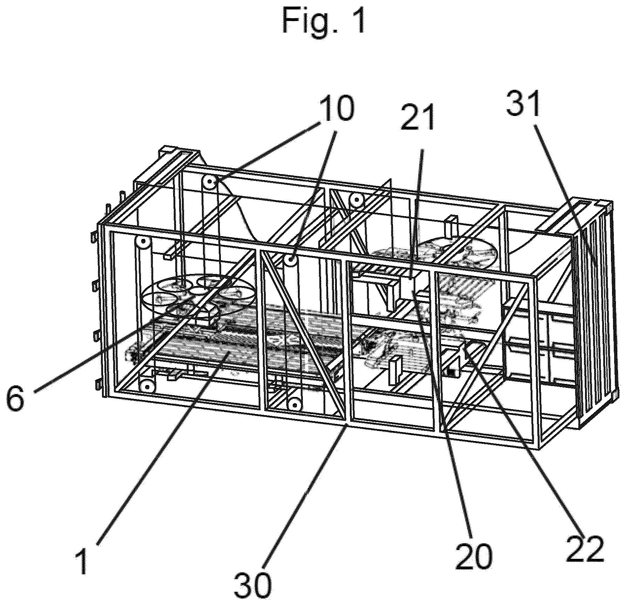

Figur 1 zeigt eine erfindungsgemäße Vorrichtung umfassend eine Landeplattform 1, eine Hebeeinheit 10 und eine Lagerungseinheit 20, die an einem Transportgestell 30 befestigt sind. Teilweise angedeutet ist die Umhüllung durch einen Standard-Seefracht-Container 31. Die Lagerungseinheit 20 umfasst zwei übereinander angeordnete um eine vertikale Achse drehbare Dreheinheiten 21 und 22. Jede Dreheinheit 21, 22 weist zwei Lagerebenen 21a, 21b bzw. 22a, 22b auf, die auf gegenüberliegenden Seiten der vertikalen Achse angeordnet sind, wie Figur 4 zeigt. Die beiden Lagerebenen 21a, 21b bzw. 22a, 22b sind vertikal zueinander versetzt angeordnet, so dass die auf der einen Lagerebene lagernde Drohne die auf der anderen Lagerebene lagernde Drohne von ober betrachtet überlappen kann, ohne dass sich die Drohnen berühren. Wie Figur 13 zeigt, umfasst jede Lagerebene 21a, 21b, 22a, 22b ein Fördersystem, dass eine Förderbahn 23 umfasst, das die Entgegennahme und/oder Übergabe einer Drohne 6 an die Landeplattform 1 ermöglicht. Die Aufstandsfläche der Drohne 6 in der Lagerposition wird von der Förderbahn 23 gebildet.

Die Hebeeinheit 10 ermöglicht das Anheben und Absenken der Landeplattform 1 bis zu einer Höhe, von der eine Drohne 6 starten und landen kann (Start-Höhe), sowie zu einer Höhe, in denen die Landeplattform 1 eine Drohne an eine Lagerebene 21a, 21b, 22a, 22b übergeben oder von einer Lagerebene entgegennehmen kann (Lagerebenen-Höhe).

Die mobile Vorrichtung wird von der Drohne 6 gesteuert.

Die Dreheinheit 21 kann in 90-Grad Schritten positioniert werden. Die Position der Dreheinheit 21 wird über Sensoren erfasst. Die Lagerebenen 21a, 21b, 22a, 22b weisen Niederhalter 24 zum Niederhalten der Kufen der Landegestells der Drohne 6 auf. Die Lagerposition der Drohne 6 wird über Sensoren erfasst. Die Drohne wird vom Fördersystem auf die Lagerebene 21a, 21b, 22a, 22b gezogen und gegen Endanschläge bewegt.

Die Dreheinheit 21 auch dann gedreht werden kann, wenn sich eine Lagerebene 21a, 21b, 22a, 22b auf Höhe der Landeplattform 1 befindet. In einer Position der Lagerebene 21a, 21b, 22a, 22b kann ein Akku einer auf der Lagerebene lagernden Drohne 6 geladen werden. Das Laden erfolgt über eine Ladelanze. Die Lagerebene 21a, 21b, 22a, 22b ist nach einer 180 Grad Drehung aus der Übergabeposition der Lagerebene für einen Menschen zugänglich.

Die Landeplattform 1 umfasst eine Landefläche umfassend zwei in derselben horizontalen Ebene parallel angeordnete Drohnen-Förderbänder 2, die so beabstandet sind, dass eine auf der Landefläche stehende Drohne 6 gleichzeitig mit beiden Drohnen-Förderbändern 2 Kontakt haben kann, zwei Schiebeleisten 3, die jeweils zumindest teilweise parallel zur Laufrichtung der Drohnen-Förderbänder 2 verlaufen und oberhalb der Drohnen-Förderbänder 2 in einer Richtung quer zur Laufrichtung der Drohnen-Förderbänder 2 aufeinander zu bewegt werden können, so dass sie eine auf der Landefläche stehende Drohne 6 verschieben können, wobei die auf der Landefläche stehende Drohne 6 durch Bewegung der Drohnen-Förderbänder 2 und/oder Bewegung der Schiebeleisten 3 in eine Position bewegt werden kann, in der die Drohne 6 an eine Lagerebene 21a, 21b, 22a, 22b übergeben werden kann (Übergabeposition der Drohne).

Eine Drohne 6 kann durch Bewegung der Drohnen-Förderbänder 2 und/oder Bewegung der Schiebeleisten 3 in eine horizontale Position bewegt werden, in der die Drohne 6 starten kann (horizontale Startposition der Drohne).

Die Landeplattform 1 umfasst eine Bestückungseinheit, umfassend
eine zwischen den Drohnen-Förderbändern angeordneten Hubvorrichtung 7 für Transportgut 4, ein Transportgut-Förderband zur Bewegung des Transportguts 4 auf die Hubvorrichtung 7, wobei die auf der Landefläche stehende Drohne 6 durch Bewegung der Drohnen-Förderbänder 2 und/oder Bewegung der Schiebeleisten 3 in eine Position bewegt werden kann, in der die Drohne 6 auf der Hubvorrichtung 7 angeordnetes Transportgut 4 aufnehmen kann (Beladeposition).

Die Drohnen-Förderbänder 2 sind als Modultransportbänder ausgebildet. Die Einzelelemente der Modulförderbänder sind zumindest teilweise offen, so dass Feuchtigkeit ablaufen kann.

Die Drohnen-Förderbänder 2 werden über einen Elektromotor angetrieben.

Die Schiebeleisten 3 können eine Drohne 6 so verschieben, dass die Drohne 6 gleichzeitig mit beiden Drohnen-Förderbändern 2 Kontakt hat. Die Kufen des Landegestells der Drohne 6 können durch die Schiebeleisten 3 in eine Position parallel zu der Laufrichtung der Drohnen-Förderbänder 2 bewegt werden. Die Schiebeleisten 3 werden über einen Kettentrieb angetrieben. Die Schiebeleisten 3 sind aus profiliertem Edelstahl. Die Schiebeleisten 3 können, wenn sie sich voneinander weg bewegen, auf der Landefläche befindliche Fremdteile wie beispielsweise kleine Äste oder Laub nach außen von der Landefläche runterschieben. Die beiden Endlagen einer Schiebeleiste 3 ("außen" bzw. "innen") werden mechanisch begrenzt. Die beiden Endlagen der Schiebeleisten 3 ("außen" bzw. "innen") werden sensorisch abgefragt. Bei der Bewegung der Drohne 6 in die Beladeposition wird ein Landegestell der Drohne 6 an einer Anschlagskante ausgerichtet. Bei der Bewegung der Drohne in die Beladeposition werden die Kufen des Landegestells der Drohne 6 unter zwei Niederhaltelaschen bewegt. Das Erreichen der Beladeposition wird durch Sensorik abgefragt.

Niederhaltelaschen halten das Landegestell der Drohne 6, während die Drohne auf der Hubvorrichtung 7 angeordnetes Transportgut 4 aufnimmt.

Die Hubvorrichtung 7 ist als Scherenhubtisch ausgeführt. Die Endlagen der Hubvorrichtung 7 werden über Sensoren erfasst. Die Endlagen de Hubvorrichtung 7 sind mit Sicherheitsanschlägen gegen Beschädigungen gesichert. Der Antrieb der Hubvorrichtung 7 erfolgt über einen Elektromotor und ein angeflanschtes Getriebe.

Die Landefläche ist ca. 1,8 m mal 1,8 m groß. Diese Größe ermöglicht es, dass die Drohne 6 auch dann sicher auf der Landefläche landen kann, wenn die Drohne wegen äußerer Bedingungen oder wegen Ungenauigkeiten in der Steuerung oder Ortung punktgenauere Landungen nicht gewährleistet sind.

Wie Figur 10 zeigt, weist die mobile Vorrichtung seitlich benachbart zur der Lagerungseinheit 20 auf der der Landeplattform 1 gegenüberliegenden Seite einen Freiraum auf, der als Reparatur und Wartungsbereich genutzt werden kann.

## Patentansprüche

1. Mobile Vorrichtung zur Entsendung und Aufnahme von Drohnen (6) umfassend
eine Landeplattform (1),
eine Hebeeinheit (10) zur Verstellung einer Höhe der Landeplattform (1),
eine Lagerungseinheit (20),
wobei die Hebeeinheit (10) ein Anheben und Absenken der Landeplattform
(1) bis zu einer Höhe, von der eine Drohne (6) starten und landen kann, sowie zu einer Höhe, in denen die Landeplattform (1) die Drohne (6) an eine Lagerebene (21a, 21b, 22a, 22b) der Lagerungseinheit (20) übergeben oder von der Lagerebene (21a, 21b, 22a, 22b) entgegennehmen kann, ermöglicht,
**dadurch gekennzeichnet, dass**
die Lagerungseinheit (20) eine um eine vertikale Achse drehbare Dreheinheit (21, 22) umfasst, die zwei Lagerebenen (21a, 21b, 22a, 22b) aufweist, die auf gegenüberliegenden Seiten der vertikalen Achse angeordnet sind, und dass
die beiden Lagerebenen (21a, 21b, 22a, 22b) vertikal zueinander versetzt angeordnet sind, so dass die auf der einen Lagerebene lagernde Drohne (6) die auf der anderen Lagerebene lagernde Drohne (6) von oben betrachtet überlappen kann, ohne dass die Drohnen (6) sich berühren.

2. Mobile Vorrichtung nach Anspruch 1, **dadurch gekennzeichnet, dass** die Landeplattform (1), die Hebeeinheit (10) und die Lagerungseinheit (20) in einem Transportgestell (30) befestigt sind.

3. Mobile Vorrichtung nach Anspruch 2, **dadurch gekennzeichnet, dass** das Transportgestell (30) als komplettes Modul in einen Standard-Seefracht-Container eingebracht werden kann.

4. Mobile Vorrichtung nach Anspruch 3, **dadurch gekennzeichnet, dass** der Seefracht-Container ein Dach hat, das zum Öffnen und Schließen ausgebildet ist.

5. Mobile Vorrichtung nach einem der vorhergehenden Ansprüche, **dadurch gekennzeichnet, dass** die Lagerungseinheit (20) zwei übereinander angeordnete Dreheinheiten (21, 22) umfasst.

6. Mobile Vorrichtung nach einem der vorhergehenden Ansprüche, **dadurch gekennzeichnet, dass** jede Lagerebene (21a, 21b, 22a, 22b) ein Fördersystem umfasst, das eine Förderbahn (23) oder eine Rollenbahn umfasst, das eine Entgegennahme und/oder Übergabe der Drohne (6) an die Landeplattform (1) ermöglicht.

7. Mobile Vorrichtung nach einem der vorhergehenden Ansprüche, **dadurch gekennzeichnet, dass** die Dreheinheit (21, 22) in 90-Grad Schritten positioniert werden kann.

8. Mobile Vorrichtung nach einem der vorhergehenden Ansprüche, **dadurch gekennzeichnet, dass** eine Position der Dreheinheit (21, 22) über Sensoren erfasst wird.

9. Mobile Vorrichtung nach einem der vohergehenden Ansprüche, **dadurch gekennzeichnet, dass** die Dreheinheit (21, 22) auch dann gedreht werden kann, wenn sich eine Lagerebene (21a, 21b, 22a, 22b) auf Höhe der Landeplattform (1) befindet.

10. Mobile Vorrichtung nach einem der vorhergehenden Ansprüche, **dadurch gekennzeichnet, dass** in einer Position der Lagerebene (21a, 21b, 22a, 22b) ein Akku einer auf der Lagerebene (21a, 21b, 22a, 22b) lagernden Drohne (6) geladen werden kann.

11. Mobile Vorrichtung nach einem der vorhergehenden Ansprüche, **dadurch gekennzeichnet, dass** die Lagerebene (21a, 21b, 22a, 22b) nach einer 180 Grad Drehung aus einer Übergabeposition der Lagerebene (21a, 21b, 22a, 22b) für einen Menschen zugänglich ist.

12. Mobile Vorrichtung nach einem der vorhergehenden Ansprüche, **dadurch gekennzeichnet, dass** die mobile Vorrichtung seitlich benachbart zur der Lagerungseinheit (20) auf einer der Landeplattform gegenüberliegenden Seite einen Freiraum aufweist, der als Reparatur und Wartungsbereich genutzt werden kann.

13. Mobile Vorrichtung nach einem der vorhergehenden Ansprüche, **dadurch gekennzeichnet, dass** die mobile Vorrichtung dazu eingerichtet ist, von der Drohne (6) gesteuert zu werden.

14. Mobile Vorrichtung nach einem der vorhergehenden Ansprüche, **dadurch gekennzeichnet, dass** die Landefläche umfasst: zwei in derselben horizontalen Ebene parallel angeordnete Förderbänder, die so beabstandet sind, dass eine auf der Landefläche stehende Drohne gleichzeitig mit beiden Förderbändern Kontakt haben kann (Drohnen-Förderbänder), zwei Schiebeleisten, die jeweils zumindest teilweise parallel zu einer Laufrichtung der Drohnen-Förderbänder verlaufen und oberhalb der Drohnen-Förderbänder in einer Richtung quer zur Laufrichtung der Drohnen-Förderbänder aufeinander zu bewegt werden können, so dass sie eine auf der Landefläche stehende Drohne verschieben können, wobei die auf der Landefläche stehende Drohne durch Bewegung der Drohnen-Förderbänder und/oder Bewegung der Schiebeleisten in eine Position bewegt werden kann, in der die Drohne an eine der Lagerebenen übergeben werden kann.

15. Mobile Vorrichtung nach Anspruch 14, **dadurch gekennzeichnet, dass** die Drohne durch Bewegung der Drohnen-Förderbänder und/oder Bewegung der Schiebeleisten in eine horizontale Position bewegt werden kann, in der die Drohne starten kann.

## Claims

1. Mobile device for sending and receiving drones (6), comprising
a landing platform (1),
a lifting unit (10) for adjusting the height of the landing platform (1),
a storage unit (20),
wherein the lifting unit (10) enables the landing platform (1) to be raised and lowered to a height from which a drone (6) can take off and land, as well as to a height at which the landing platform (1) can transfer the drone (6) to a storage plane (21a, 21b, 22a, 22b) of the storage unit (20) or receive it from the storage plane (21a, 21b, 22a, 22b), **characterised in that** the storage unit (20) comprises a rotary unit (21, 22) rotatable about a vertical axis, having two storage planes (21a, 21b, 22a, 22b) arranged on opposite sides of the vertical axis,
and **in that** the two storage planes (21a, 21b, 22a, 22b) are arranged offset from one another in the vertical direction, such that a drone (6) stored on one storage plane can overlap, when viewed from above, a drone (6) stored on the other storage plane, without the drones (6) coming into contact with one another.

2. Mobile device according to Claim 1, **characterised in that** the landing platform (1), the lifting unit (10) and the storage unit (20) are mounted within a transport frame (30).

3. Mobile device according to Claim 2, **characterised in that** the transport frame (30) can be loaded as a complete module into a standard ocean freight container.

4. Mobile device according to Claim 3, **characterised in that** the ocean freight container has a roof configured to open and close.

5. Mobile device according to any one of the preceding claims, **characterised in that** the storage unit (20) comprises two rotary units (21, 22) arranged one above the other.

6. Mobile device according to any one of the preceding claims, **characterised in that** each storage plane (21a, 21b, 22a, 22b) comprises a conveying system including a conveyor track (23) or a roller track, which enables the drone (6) to be received from and/or transferred to the landing platform (1).

7. Mobile device according to any one of the preceding claims, **characterised in that** the rotary unit (21, 22) can be indexed in 90-degree increments.

8. Mobile device according to any one of the preceding claims, **characterised in that** the position of the rotary unit (21, 22) is detected by means of sensors.

9. Mobile device according to any one of the preceding claims, **characterised in that** the rotary unit (21, 22) can be rotated even when a storage plane (21a, 21b, 22a, 22b) is at the same height as the landing platform (1).

10. Mobile device according to any one of the preceding claims, **characterised in that**, in one position of the storage plane (21a, 21b, 22a, 22b), a battery of a drone (6) stored on that storage plane (21a, 21b, 22a, 22b) can be charged.

11. Mobile device according to any one of the preceding claims, **characterised in that**, after a rotation of 180 degrees from a transfer position (of the storage plane (21a, 21b, 22a, 22b)), the storage plane (21a, 21b, 22a, 22b) is accessible to a person.

12. Mobile device according to any one of the preceding claims, **characterised in that** the mobile device has, laterally adjacent to the storage unit (20), on a side opposite the landing platform, a free space which can be used as a repair and maintenance area.

13. Mobile device according to any one of the preceding claims, **characterised in that** the mobile device is configured to be controlled by the drone (6).

14. Mobile device according to any one of the preceding claims, **characterised in that** the landing surface comprises
two conveyor belts arranged in parallel in the same horizontal plane, spaced such that a drone standing on the landing surface can be in simultaneous contact with both conveyor belts (drone conveyor belts),
two guide rails, each running at least partially parallel to a direction of travel of the drone conveyor belts and arranged above the drone conveyor belts, which can be moved towards one another in a direction transverse to the direction of travel of the drone conveyor belts, so as to be capable of repositioning a drone standing on the landing surface,
whereby the drone standing on the landing surface can be moved, by actuation of the drone conveyor belts and/or movement of the guide rails, into a position in which the drone can be transferred to one of the storage planes.

15. Mobile device according to Claim 14, **characterised in that** the drone can be moved, by actuation of the drone conveyor belts and/or movement of the guide rails, into a horizontal position from which the drone can take off.

## Revendications

1. Dispositif mobile d'envoi et de réception de drones (6) comprenant :
une aire d'atterrissage (1) ;
un système de levage (10) pour ajuster une hauteur de l'aire d'atterrissage (1) ;
un box de stockage (20),
dans lequel le système de levage (10) permet de soulever et abaisser l'aire d'atterrissage (1) jusqu'à une hauteur à partir de laquelle un drone (6) peut décoller et atterrir ainsi qu'à une hauteur à laquelle l'aire d'atterrissage (1) peut transférer le drone (6) vers un niveau (21a, 21b, 22a, 22b) du box de stockage (20) ou le transférer depuis le niveau (21a, 21b, 22a, 22b), **caractérisé par le fait que** le box de stockage (20) comprend une unité rotative (21, 22) pouvant tourner autour d'un axe vertical dont deux niveaux (21a, 21b, 22a, 22b) sont disposés de part et d'autre de l'axe vertical,
et que les deux niveaux (21a, 21b, 22a, 22b) sont décalés verticalement l'un par rapport à l'autre, de sorte que le drone (6) reposant sur un niveau puisse recouvrir, vu d'en haut, le drone (6) reposant sur l'autre niveau, sans que les drones (6) se touchent.

2. Dispositif mobile selon la revendication 1, **caractérisé par le fait que** l'aire d'atterrissage (1), le système de levage (10) et le box de stockage (20) sont fixés dans un rack de transport (30).

3. Dispositif mobile selon la revendication 2, **caractérisé par le fait que** le rack de transport (30) peut être inséré en tant que module complet dans un conteneur maritime standard.

4. Dispositif mobile selon la revendication 3, **caractérisé par le fait que** le conteneur maritime possède un toit conçu pour être ouvert et fermé.

5. Dispositif mobile selon l'une des revendications précédentes, **caractérisé par le fait que** le box de stockage (20) se compose de deux unités rotatives (21, 22) disposées l'une au-dessus de l'autre.

6. Dispositif mobile selon l'une des revendications précédentes, **caractérisé par le fait que** chaque niveau (21a, 21b, 22a, 22b) comprend un système de transport comprenant une bande transporteuse (23) ou un convoyeur à rouleaux permettant la réception ou le transfert du drone (6) sur l'aire d'atterrissage (1).

7. Dispositif mobile selon l'une des revendications précédentes, **caractérisé par le fait que** l'unité rotative (21, 22) peut être positionnée suivant des pas de 90 degrés.

8. Dispositif mobile selon l'une des revendications précédentes, **caractérisé par le fait qu'**une position de l'unité rotative (21, 22) est détectée par des capteurs.

9. Dispositif mobile selon l'une des revendications précédentes, **caractérisé par le fait que** l'unité rotative (21, 22) peut être tournée même si un niveau (21a, 21b, 22a, 22b) se trouve à la hauteur de l'aire d'atterrissage (1).

10. Dispositif mobile selon l'une des revendications précédentes, **caractérisé par le fait qu'**une batterie d'un drone (6) posé sur le niveau (21a, 21b, 22a, 22b) peut être chargée dans une position donnée de ce niveau (21a, 21b, 22a, 22b).

11. Dispositif mobile selon l'une des revendications précédentes, **caractérisé par le fait que** le niveau (21a, 21b, 22a, 22b) est accessible par une personne après une rotation de 180 degrés à partir d'une position de transfert de ce niveau (21a, 21b, 22a, 22b).

12. Dispositif mobile selon l'une des revendications précédentes, **caractérisé par le fait que** le dispositif mobile comporte, sur un côté opposé à l'aire d'atterrissage et à proximité latéralement du box de stockage (20), un espace libre pouvant servir de zone de réparation et de maintenance.

13. Dispositif mobile selon l'une des revendications précédentes, **caractérisé par le fait que** le dispositif mobile est conçu pour être commandé par le drone (6).

14. Dispositif mobile selon l'une des revendications précédentes, **caractérisé par le fait que** la piste d'atterrissage comprend :
deux bandes transporteuses disposées en parallèle dans le même plan horizontal, espacées de telle sorte qu'un drone se trouvant sur la piste d'atterrissage puisse entrer en contact avec les deux bandes transporteuses (bandes transporteuses pour drones) en même temps,
deux glissières qui sont disposées chacune au moins partiellement parallèlement à une direction de déplacement des bandes transporteuses et qui peuvent être déplacées l'une vers l'autre au-dessus des bandes transporteuses et dans une direction perpendiculaire à leur direction de déplacement, de sorte qu'elles peuvent déplacer un drone se trouvant sur la piste d'atterrissage ;
le drone se trouvant sur la piste d'atterrissage pouvant être déplacé, par le mouvement des bandes transporteuses et/ou des glissières, vers une position dans laquelle **il** peut être transféré vers l'un des niveaux.

15. Dispositif mobile selon la revendication 14, **caractérisé par le fait que** le drone peut être mis en position horizontale, dans laquelle il peut décoller, en déplaçant les bandes transporteuses et/ou les glissières.
